(19) Europäisches Patentamt
European Patent Office
Office européen des brevets

(11) **EP 3 291 188 B1**

(12) **FASCICULE DE BREVET EUROPEEN**

(45) Date de publication et mention de la délivrance du brevet:
**05.06.2019 Bulletin 2019/23**

(51) Int Cl.:
**G06Q 20/34** (2012.01)    **G07F 7/10** (2006.01)
**G07F 7/12** (2006.01)

(21) Numéro de dépôt: **17189432.2**

(22) Date de dépôt: **05.09.2017**

(54) **PROCÉDÉ DE CONTRÔLE D'UN DISPOSITIF ÉLECTRONIQUE ET DISPOSITIF ÉLECTRONIQUE CORRESPONDANT**

VERFAHREN ZUR STEUERUNG EINES ELEKTRONISCHEN GERÄTS UND KORRESPONDIERENDES ELEKTRONISCHES GERÄT

METHOD FOR CONTROLLING AN ELECTRONIC DEVICE AND CORRESPONDING ELECTRONIC DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2016 FR 1658266**

(43) Date de publication de la demande:
**07.03.2018 Bulletin 2018/10**

(73) Titulaire: **IDEMIA France**
**92700 Colombes (FR)**

(72) Inventeurs:
• **CHAMBEROT, Francis**
**92700 Colombes (FR)**
• **DE OLIVEIRA, Marco**
**92700 COLOMBES (FR)**

(74) Mandataire: **Cougard, Jean-Marie et al**
**Cabinet Beau de Loménie**
**158, rue de l'Université**
**75340 Paris Cedex 07 (FR)**

(56) Documents cités:
**EP-A1- 2 506 226        WO-A1-2012/037971**
**WO-A1-2012/162351**

**Description**

Arrière-plan de l'invention

La présente invention se situe dans le domaine général des dispositifs électroniques et concerne plus particulièrement un dispositif électronique, tel qu'une carte à puce par exemple, apte à coopérer avec un terminal externe pour réaliser une transaction, dans le domaine bancaire par exemple.

L'invention s'applique plus particulièrement, mais de manière non exclusive, aux cartes à puce (ou cartes à microcircuit), conformes par exemple à la norme ISO7816. L'invention vise notamment la sécurisation d'une carte à puce fonctionnant selon le protocole EMV (pour « *Europay Mastercard Visa* »).

De manière générale, une carte à puce est conçue pour communiquer avec un dispositif externe à cette carte, autrement appelé terminal ou lecteur. Ces cartes permettent d'effectuer divers types de transactions, telles que par exemple des transactions de paiement, de prélèvement ou encore d'authentification du porteur. Les cartes à puce pour applications bancaires (carte de crédit, carte de débit etc.), par exemple, sont aptes à coopérer avec des terminaux de paiement ou des distributeurs automatiques de billets (DAB) pour réaliser divers opérations financières.

EMV est le protocole standardisé utilisé aujourd'hui majoritairement dans le monde pour sécuriser notamment les transactions de paiement effectuées par des cartes à puce.

Le protocole EMV a été conçu pour diminuer les risques de fraudes lors d'une transaction de paiement en permettant notamment l'authentification à la fois de la carte à puce et de son porteur. Ce processus d'authentification fait appel à une combinaison de cryptogrammes (ou clés cryptées) et de signatures numériques et nécessite éventuellement la saisie d'un code secret (appelé communément code PIN) par le porteur de la carte.

Selon le type de carte utilisé, la situation, ou encore le montant considéré, une carte EMV peut fonctionner en ligne ou hors ligne. En mode en ligne, la carte EMV peut communiquer, via le lecteur, avec l'entité émettrice correspondante (la banque à l'origine de la carte, par exemple) afin de vérifier en particulier que la transaction en cours est légitime. En revanche, si la carte EMV fonctionne en mode hors ligne, celle-ci applique des critères de vérification préenregistrés pour décider si la transaction doit être autorisée ou refusée.

De nombreux mécanismes de sécurité ont récemment été développés afin de sécuriser autant que possible l'usage croissant des cartes à puce, de type EMV notamment.

Cependant, la nature des problèmes de sécurité auxquels doivent faire face les cartes EMV évoluent en permanence. De nouveaux types de défaillance ou d'attaque susceptibles d'affecter le fonctionnement d'une carte bancaire sont régulièrement décelés. C'est pourquoi, de nouveaux mécanismes de sécurisation sont constamment développés afin de protéger au mieux les cartes bancaires contre les nouvelles menaces.

Equiper les cartes EMV avec des mécanismes de sécurité adéquats constitue dont aujourd'hui un réel défi. Les cartes EMV, et plus généralement les dispositifs électroniques configurés pour traiter des transactions, ne sont pas toujours protégés de façon satisfaisante.

Le document WO 2012/037971 A1 divulgue un dispositif de paiement, tel qu'une carte, capable d'utiliser un montant préautorisé dans une infrastructure existante comprenant des terminaux de paiement ou pour utiliser des produits prépayés hors-ligne dans cette infrastructure, dans lequel des mises à jour des produits préautorisés ou produits hors-ligne prépayés peuvent être envoyées par l'émetteur de la carte.

Le document WO 2012/162351 A1 divulgue un système et procédé pour mettre à jour des paramètres dans une carte à puce, tels que le blocage ou déblocage d'une application.

Objet et résumé de l'invention

L'invention est définie dans le jeu de revendications ci-joint.

A cet effet, la présente invention concerne un procédé de contrôle mis en oeuvre par un dispositif électronique, ledit procédé comprenant les étapes suivantes :

- réception d'une commande d'instructions comprenant des identifiants d'instructions préenregistrées dans une mémoire du dispositif électronique ;
- formation, à partir des identifiants, d'un code définissant un jeu d'instructions, ledit jeu d'instructions combinant les instructions préenregistrées pour l'exécution d'un premier contrôle sécuritaire ; et
- enregistrement, dans une mémoire du dispositif électronique, du code de sorte à configurer le dispositif électronique pour exécuter le premier contrôle sécuritaire.

L'invention permet avantageusement de personnaliser le comportement du dispositif électronique, ce dernier pouvant être une carte à puce, de type EMV par exemple. Cette personnalisation est réalisée à partir de blocs d'instructions préenregistrées dans une mémoire du dispositif électronique, et peut être déclenchée à distance si besoin.

Grâce à l'invention, il est possible de personnaliser le comportement sécuritaire du dispositif électronique. En particulier, il est possible d'adapter un contrôle sécuritaire exécuté par le dispositif électronique, notamment lorsque ce dernier traite une transaction EMV en cours. L'invention permet d'adapter le comportement sécuritaire d'un dispositif électronique, tel qu'une carte à puce EMV par exemple, à de nouveaux schémas de fraude, y compris des schémas de fraude détectés alors que la carte à puce est déjà en cours d'utilisation.

L'invention permet non seulement de personnaliser la valeur de paramètres d'un contrôle sécuritaire exécuté par le dispositif électronique, mais permet plus généralement d'adapter la structure même dudit contrôle sécuritaire. Il est ainsi possible d'adapter l'ordre ou le type d'opérations de contrôle sécuritaire exécutées par le dispositif électronique, notamment lors d'une transaction EMV. Il est possible de préenregistrer une pluralité d'instructions correspondant à diverses opérations de contrôle sécuritaire et d'activer une ou plusieurs instructions dans le dispositif électronique parmi les instructions préenregistrées disponibles afin de programmer dynamiquement les opérations de contrôle sécuritaire souhaitées.

Selon un mode de réalisation particulier, le code est formé par concaténation des identifiants reçus.

Selon un mode de réalisation particulier, la commande d'instructions est une commande de script reçue lors d'une transaction EMV.

Selon un mode de réalisation particulier, le procédé comprend une étape d'exécution du jeu d'instructions défini par le code de sorte à réaliser le premier contrôle sécuritaire lors d'une transaction en cours de traitement par le dispositif électronique.

Selon un mode de réalisation particulier, l'étape d'exécution du jeu d'instructions est réalisée en réponse à une commande GENERATE AC préalablement reçue d'un terminal externe conformément au protocole EMV.

Selon un mode de réalisation particulier, l'étape d'exécution du jeu d'instructions comprend :

- détermination d'un premier résultat délivré en réalisant le premier contrôle sécuritaire ; et
- réalisation d'au moins une opération de sécurisation définie dans ledit jeu d'instructions, l'opération de sécurisation étant fonction du premier résultat du premier contrôle sécuritaire.

Selon un mode de réalisation particulier, ladite au moins une opération de sécurisation comprend au moins l'un parmi :

- envoi d'une notification comprenant une donnée représentative du premier résultat du premier contrôle sécuritaire ;
- enregistrement, dans une mémoire du dispositif électronique, d'une donnée d'historisation représentative du premier résultat du premier contrôle sécuritaire ; et
- génération d'une décision sécuritaire selon laquelle la transaction en cours doit être traitée.

Dans une mise en oeuvre particulière, la donnée représentative du premier résultat du premier contrôle sécuritaire est envoyée dans un paramètre IDD (pour « *Issuer Discretionary Data* ») inclus dans le champ IAD (pour « *Issuer Application Data* ») d'un message de transaction, conformément au protocole EMV.

Selon un mode de réalisation particulier, les instructions préenregistrées formant ledit jeu d'instructions comprennent :

- au moins deux premières instructions préenregistrées pour l'exécution d'une pluralité d'opérations de contrôle sécuritaire en tant que premier contrôle sécuritaire ;
- au moins une deuxième instruction préenregistrée comprenant un opérateur de liaison définissant un lien de logique combinatoire entre lesdites opérations de contrôle sécuritaire ; et
- au moins une troisième instruction préenregistrée pour exécuter une dite opération de sécurisation en fonction du résultat desdites opérations de contrôle sécuritaire conformément audit lien de logique combinatoire.

A partir notamment des opérateurs de liaison, il est possible d'utiliser une syntaxe offrant une grande flexibilité dans la manière dont la configuration du dispositif électronique est personnalisée.

Selon un mode de réalisation particulier, le premier résultat du premier contrôle sécuritaire est un booléen.

Selon un mode de réalisation particulier, l'opérateur de liaison comprend au moins l'un parmi :

- un opérateur « ET » ;
- un opérateur « OU » ;
- un opérateur d'égalité ou d'inégalité ; et
- un opérateur de comparaison.

Selon un mode de réalisation particulier, le procédé comprend les étapes suivantes :

- réalisation d'un contrôle sécuritaire préliminaire avant le premier contrôle sécuritaire, le contrôle sécuritaire préliminaire délivrant un résultat préliminaire ;
- détermination d'un résultat final à partir du résultat préliminaire issu du contrôle sécuritaire primaire et du premier résultat issu du premier contrôle sécuritaire ; et
- traitement de la transaction en cours selon le résultat final.

Selon un mode de réalisation particulier, le résultat préliminaire correspond à un premier degré de sécurité et le résultat final correspond à un deuxième degré de sécurité, ledit deuxième degré de sécurité étant au moins aussi élevé que le premier degré de sécurité. Ce mode particulier permet de renforcer le comportement sécuritaire du dispositif électronique. En particulier, cela permet avantageusement d'éviter une dégradation du niveau de sécurité du dispositif électronique, dans le cas notamment où un contrôle sécuritaire serait activé de façon non autorisée à partir des instructions préenregistrées.

Selon un mode de réalisation particulier, le procédé comprend, avant l'étape de réception de la commande d'instructions comprenant lesdits identifiants d'instructions préenregistrées, une étape d'enregistrement, dans la mémoire du dispositif électronique, desdites instructions préenregistrées.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un dispositif électronique ou plus généralement dans un ordinateur, ce programme comportant des instructions adaptées à la mise en oeuvre des étapes d'un procédé de contrôle tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un dispositif électronique comprenant :

- une mémoire ;
- un module de réception configuré pour recevoir une commande d'instructions comprenant des identifiants d'instruction préenregistrées dans ladite mémoire ;
- un module de formation configuré pour former, à partir des identifiants, un code définissant un jeu d'instructions, ledit jeu d'instructions combinant les instructions préenregistrées pour l'exécution d'un premier contrôle sécuritaire ; et
- un module d'enregistrement configuré pour enregistrer, dans une mémoire du dispositif électronique, le code de sorte à configurer le dispositif électronique pour exécuter le premier contrôle sécuritaire.

On notera que les différents modes de réalisation mentionnés ci-avant en relation avec le procédé de contrôle de l'invention ainsi que les avantages associés s'appliquent de façon analogue au dispositif électronique de l'invention.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:

- la figure 1 représente schématiquement une transaction EMV selon un mode de réalisation particulier ;
- la figure 2 représente schématiquement la structure d'une carte à puce configurée pour coopérer avec un terminal externe, conformément à un mode de réalisation particulier de l'invention ;
- la figure 3 représente schématiquement des modules mis en oeuvre dans la carte à puce de la figure 1, selon un mode de réalisation particulier ;
- la figure 4 représente, sous forme d'un organigramme, les étapes d'un procédé de contrôle conforme à un mode de réalisation particulier ;
- la figure 5 représente schématiquement le procédé de contrôle illustré en figure 4; et
- la figure 6 représente, sous forme d'un organigramme, les étapes d'un procédé de contrôle conforme à un mode de réalisation particulier.

Description détaillée de plusieurs modes de réalisation

Comme indiqué précédemment, la présente invention concerne les dispositifs électroniques, tels que les cartes à puce par exemple, configurés pour coopérer avec un terminal externe pour réaliser une transaction, dans le domaine bancaire par exemple.

L'invention se propose d'améliorer le contrôle de tels dispositifs électroniques afin notamment de mieux protéger ces dispositifs vis-à-vis des menaces sécuritaires. L'invention vise également à améliorer le suivi de l'utilisation qui est faite d'un tel dispositif électronique par son ou ses utilisateurs.

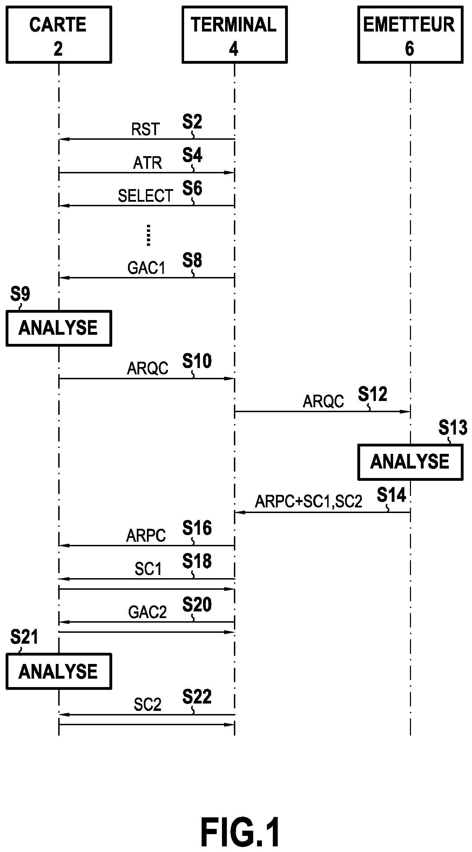

La **figure 1** représente un exemple d'une transaction de paiement conforme au protocole EMV, à l'aide d'une carte à puce 2. Dans cet exemple, la carte 2 est une carte EMV.

Lors de la mise en oeuvre d'une transaction, le protocole EMV s'articule en trois phases, des variantes étant toutefois possibles. On comprendra que certains éléments et opérations généralement mis en oeuvre lors d'une transaction EMV ont été volontairement omis car ils ne sont pas nécessaires à la compréhension de la présente invention.

Lors d'une première phase destinée à authentifier la carte à puce 2 utilisée, le terminal 4 et la carte 2 s'échangent un message RESET (RST) en S2 puis une réponse ATR en S4.

En S6, le porteur de la carte sélectionne via le terminal 4 le mode de transaction souhaité, déclenchant ainsi l'envoi d'une commande « *SELECT* » à la carte 2 afin d'initier le début de la transaction EMV.

Une fois la phase d'authentification de carte achevée, le protocole EMV procède à une phase d'authentification (non représentée) du porteur de la carte 2. Le terminal 4 détermine le procédé d'authentification du porteur à appliquer et détermine en particulier si la transaction est effectuée en mode avec vérification de code ou en mode sans vérification de code. Si le mode avec vérification de code est sélectionné, la carte à puce 2 vérifie la validité du code PIN entré par le porteur sur le terminal 4. Si en revanche le mode sans vérification de code est sélectionné, aucune vérification de code PIN n'est réalisée. Ce cas se produit par exemple lorsque le terminal est dans l'incapacité de prendre en charge la vérification d'un code PIN. Dans ce cas, la signature manuscrite du porteur peut éventuellement être requise pour authentifier ce dernier.

Une fois la phase d'authentification du porteur achevée, le protocole EMV initie la phase de vérification de la transaction. Pour ce faire, le terminal 4 envoie (S8) à la carte à puce 2 une première commande APDU dite GENERATE AC ou GAC, notée ici GAC1. Cette commande, bien connue de l'homme du métier, comprend des informations sur la transaction en cours telles que le montant de la transaction, la devise utilisée, le type de transaction, etc.

La carte EMV réalise alors, à partir des données reçues dans la commande GAC1, un premier contrôle de sécurité au cours duquel la carte 2 vérifie (S9) la transaction selon des critères de vérification prédéfinis. La carte 2 envoie (S10) ensuite, en réponse, un cryptogramme (ou certificat cryptographique) comprenant un code d'authentification de message (ou MAC pour « *Message Authentification Code* » en anglais). Ce code d'authentification MAC est par exemple crypté à partir d'une clé cryptographique mémorisée dans la carte 2. La réponse de la carte 2 dans le message ARQC dépend notamment du paramétrage de la carte effectué par l'entité émettrice (dit « émetteur ») de ladite carte.

Plus précisément, dans l'exemple considéré en figure 1, la carte à puce 2 envoie en S10 un message de type ARQC (« *Authorization Request Cryptogram* ») indiquant que la carte souhaite poursuivre la transaction en ligne avec, par exemple, un serveur distant de l'émetteur 6 de la carte 2 utilisée (mode en ligne). Le terminal 4 transmet (S12) alors le cryptogramme ARQC à l'émetteur 6 qui réalise (S13) à distance un certain nombre de vérifications afin de s'assurer que la transaction est valide. Le terminal 4 reçoit (S14) ensuite, en réponse, un message crypté de type ARPC (« *Authorisation Response Cryptogram* ») indiquant la décision de l'émetteur 6. En S14, le terminal T1 peut en outre recevoir de l'émetteur 6 une ou des commandes, dites « commandes de script » (pour « *script command* » en anglais), chacune requérant la modification dans la carte à puce 2 d'au moins un paramètre de fonctionnement. Dans cet exemple, deux commandes de script SC1 et SC2 sont envoyées en S14 par l'émetteur 6.

Le terminal 4 transmet alors le message ARPC (S16) et chacune des commandes de script SC1 et SC2 (518, S22) à la carte 2.

Plus particulièrement, dans l'exemple représenté en **figure 1,** le terminal 4 envoie en S18 la commande de script SC1 à la carte 2. En réponse à cette commande SC1, la carte à puce 2 modifie la valeur d'au moins un paramètre de fonctionnement de façon appropriée. Le terminal 4 envoie ensuite en S20 à la carte à puce 2 une deuxième commande APDU bien connue de type GENERATE AC ou GAC, notée ici GAC2. La carte 2 détermine, lors d'une étape S21 de contrôle de sécurité, de la suite à donner à la transaction en cours. Si la carte 2 accepte la transaction, celle-ci envoie, en réponse à la commande GAC2, un cryptogramme de type TC (transaction acceptée) au terminal T1. Dans le cas contraire, la carte 2 envoie un cryptogramme de type AAC au terminal 4 signifiant le refus de la transaction. En outre, toujours dans cet exemple, le terminal 4 envoie ensuite en S22 la commande de script SC2 à la carte 2. En réponse à cette commande SC2, la carte 2 modifie la valeur d'au moins un paramètre de fonctionnement de façon appropriée.

Chaque commande de script SC1, SC2 provenant de l'émetteur 6 peut être reçue en cours de transaction, avant ou après la réception de la commande GAC2, et peut donner lieu à un échange de données entre la carte 2 et le terminal 4. Le nombre et la nature des commandes de script reçues ainsi que la manière dont celles-ci sont traitées par la carte 2 peut varier selon le cas.

Les commandes de script SC1 et SC2 permettant ainsi de modifier des valeurs de paramètres de fonctionnement tels que des valeurs de seuil limite, par exemple le montant limite à partir duquel une transaction en ligne est requise. En revanche, les commandes de script telles que décrites ci-dessus ne permettent pas d'adapter le type des vérifications de contrôles qui sont effectuées par la carte 2 lors des contrôles S9 et S21. En particulier, il n'est pas aujourd'hui possible de modifier la nature (ou la structure) même des opérations de contrôle effectuées par la carte 2 ni même l'ordre dans lequel de telles vérifications de contrôle sont réalisées.

De façon connue, la structure et l'ordre des vérifications de contrôle effectuées par la carte 2 sont figées par le code de programme d'ordinateur stocké de façon permanente dans la carte. Par mesure de sécurité, ce code est enregistré de façon sécurisée afin qu'il ne soit pas possible pour un tiers malveillant de l'altérer facilement. De plus, les instructions à exécuter par la carte 2 lors de ces vérifications de contrôle sont certifiées par une autorité compétente. Toute altération ultérieure de ces instructions, par le fabricant par exemple, entraîne la perte de cette certification. Aussi, il n'est pas aujourd'hui possible de personnaliser, au cours de la vie d'une carte EMV, la structure des vérifications de contrôle effectuées par ladite carte lors d'une transaction en cours.

L'invention propose un procédé de contrôle permettant de personnaliser les instructions exécutées par une carte à puce, et plus généralement par un dispositif électronique, pour réaliser un contrôle sécuritaire, et ce sans perdre la certification du programme embarqué dans la carte. Selon différents mode de réalisation, le procédé de l'invention, mis en oeuvre par un dispositif électronique tel qu'une carte à puce par exemple, comprend : la réception d'une commande d'instructions comprenant des identifiants correspondant à d'instructions préenregistrées dans une mémoire du dispositif électronique ; la formation, à partir des identifiants, d'un code définissant un jeu d'instructions, ledit jeu d'instructions combinant les instructions préenregistrées pour l'exécution d'un premier contrôle sécuritaire ; et l'enregistrement, dans une mémoire du dispositif électronique, du code de sorte à configurer le dispositif électronique pour exécuter le premier contrôle sécuritaire.

L'invention porte également sur un dispositif électronique configuré pour mettre en oeuvre un procédé de contrôle comme défini ci-dessus.

Dans le présent exposé, des exemples de mises en oeuvre de l'invention sont décrits en relation avec une carte à puce de type EMV. On comprendra que l'invention ne se limite par exclusivement aux cartes à puce EMV mais s'applique plus généralement à tout dispositif électronique configuré pour mettre en oeuvre une transaction, y compris des dispositifs autre que des cartes à puce et qui utilisent le standard EMV, et des dispositifs électroniques qui utilisent d'autres standards de transaction.

On peut également noter que la notion de transaction est ici entendue au sens large et comprend par exemple, dans le domaine bancaire, aussi bien une transaction de paiement ou de transfert que d'une consultation d'un compte bancaire sur un terminal bancaire. Les divers modes de réalisation de l'invention sont ici décrits dans le cadre d'une carte de paiement destinée à réaliser des transactions bancaires. On comprendra que d'autres types de transactions ou opérations sont envisageables dans le cadre de l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

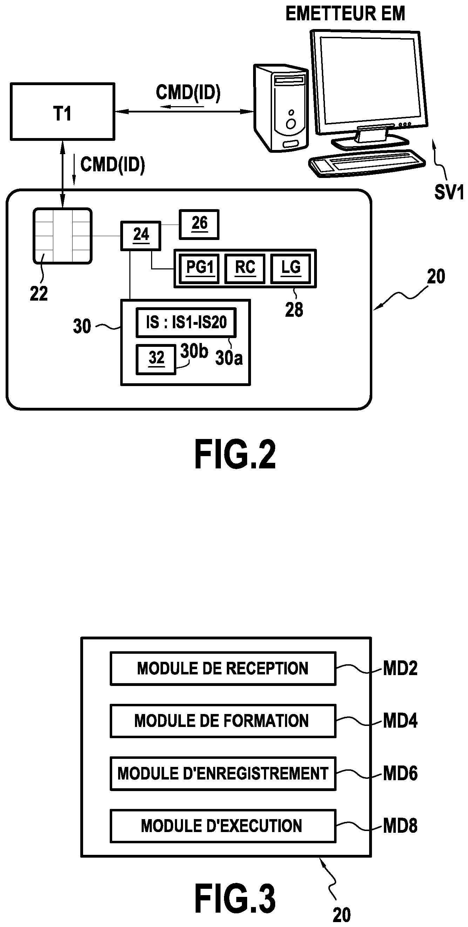

La **figure 2** représente, de manière schématique, la structure d'une carte à puce 20 de type EMV, conforme à un mode de réalisation particulier.

On comprendra que certains éléments généralement présents dans une carte à puce EMV ont été volontairement omis car ils ne sont pas nécessaires à la compréhension de la présente invention. A noter également que la carte à puce 20 représentée en **figure 2** ne constitue qu'un exemple de réalisation, d'autres mises en oeuvre étant possibles dans le cadre de l'invention. L'homme du métier comprendra en particulier que certains éléments de la carte à puce 20 ne sont décrits ici que pour faciliter la compréhension de l'invention, ces éléments n'étant pas nécessaires pour mettre en oeuvre l'invention.

La carte à puce 20 est configurée pour coopérer avec un terminal (ou lecteur) T1 afin de réaliser une transaction, telle qu'une transaction financière ou bancaire (une transaction de paiement dans le cas présent).

Le terminal T1 est configuré pour faire notamment l'interface entre la carte à puce 20 et un serveur distant SV1. Dans le cas présent, le serveur SV1 est un serveur de l'entité émettrice EM (i.e., une institution bancaire par exemple) de la carte à puce 20. Dans cet exemple, la carte à puce 20 est configurée pour communiquer, via le terminal T1, avec le serveur distant SV1 afin de mettre en oeuvre, selon le protocole EMV, une transaction dite « en ligne », c'est-à-dire impliquant un échange avec l'émetteur EM.

Plus précisément, la carte à puce 20 comprend dans cet exemple des contacts externes 22 configurés pour coopérer avec le lecteur T1, un processeur 24, une mémoire volatile réinscriptible (de type RAM) 26, une mémoire non volatile réinscriptible 28 (de type Flash par exemple) et une mémoire morte (de type ROM) 30.

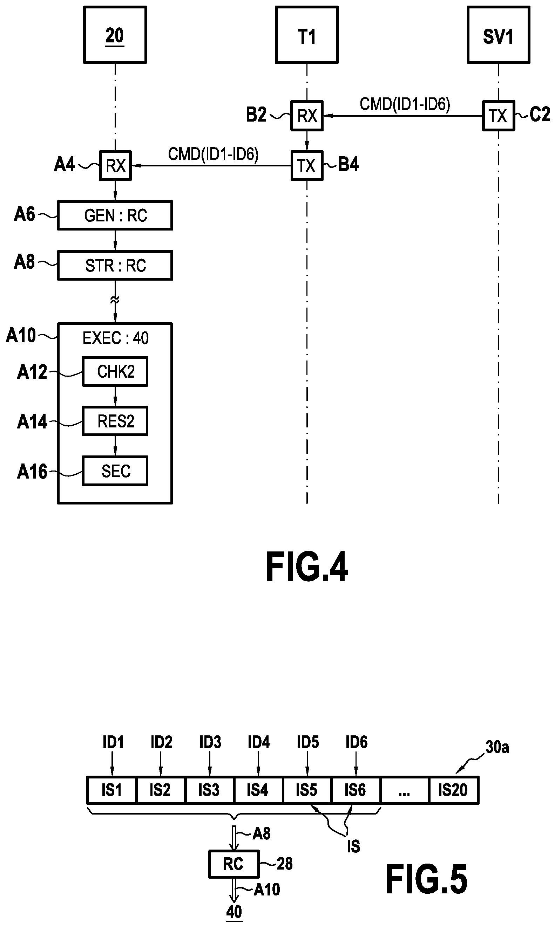

La mémoire 28 constitue dans cet exemple un support d'enregistrement (ou support d'informations) conforme à un mode de réalisation particulier, lisible par la carte à puce 20, et sur lequel est enregistré un programme d'ordinateur PG1 conforme à un mode de réalisation particulier. Ce programme d'ordinateur PG1 comporte des instructions pour l'exécution des étapes d'un procédé de contrôle selon un mode de réalisation particulier. Les principales étapes de ce procédé sont représentées, dans des modes de réalisation particuliers de l'invention, dans les **figures 4** et **5** décrites ultérieurement.

Dans un exemple particulier, la carte à puce 20 est conforme à la norme ISO 7816. Dans ce cas, les contacts externes 22 présentent des caractéristiques conformes à cette norme. On comprendra toutefois que d'autres modes de réalisation sont possibles sans l'utilisation de tels contacts externes. La carte à puce 20 peut par exemple être configurée pour coopérer avec le lecteur T1 en mode sans contact via une antenne RF intégrée dans la carte 20.

Toujours dans l'exemple considéré ici, la mémoire non volatile réinscriptible 28 est configurée pour stocker le cas échéant un code (ou indicateur) noté ici RC, ainsi qu'un fichier d'historisation LG (appelé aussi « *Log* » en anglais). Le code RC et le fichier d'historisation LG sont décrits plus en détail ci-après en référence aux **figures 3-6.**

La mémoire morte 30 comprend dans cet exemple des instructions 32 exécutables par le processeur 24, ces instructions 32 étant figées (ou statiques), c'est-à-dire non modifiables dans leur structure (type d'opération, ordre des opérations etc.). Ces instructions 32 peuvent notamment définir au moins une opération de contrôle sécuritaire (ou vérification de sécurité) exécutée par la carte à puce 20 lors d'une transaction en cours de traitement.

Par « contrôle sécuritaire », on comprend un contrôle (ou une vérification) réalisé par la carte à puce 20 à partir d'au moins un paramètre de sorte à délivrer un résultat. Ce contrôle peut porter notamment sur au moins un paramètre maintenu en mémoire dans la carte à puce 20 et/ou sur au moins un paramètre reçu par la carte à puce 20, lors d'une transaction en cours par exemple. Ce contrôle permet par exemple d'évaluer un degré de sécurité de la carte à puce 20 et de déclencher si besoin par la suite une quelconque réaction sécuritaire appropriée.

Les instructions statiques 32 définissent par exemple la vérification du montant d'une transaction en cours de sorte que, si ce montant atteint une valeur seuil limite, le mode en ligne est requis par la carte EMV 20. Ces instructions 32 étant statiques, la valeur seuil peut le cas échéant être modifiée mais la structure même de l'opération de contrôle n'est pas modifiable, cette opération de contrôle étant systématiquement exécutée par la carte à puce 20.

La mémoire morte 20 comprend en outre des instructions préenregistrées notées IS (dites aussi instructions dynamiques), sous forme de briques logicielles (ou blocs logiciels), ces instructions IS étant interprétables par la carte 20 et pouvant le cas échéant être activées en réponse à une commande CMD de sorte à être exécutées par le processeur 24. A l'état désactivée, une instruction préenregistrée IS n'est pas exécutée par la carte à puce 20. L'une au moins de ces instructions préenregistrées IS définit un contrôle sécuritaire (ou vérification de sécurité) à exécuter par la carte à puce 20, par exemple lors d'une transaction en cours de traitement. Par opposition aux instructions statiques 32, l'exécution ou non des instructions préenregistrées IS est personnalisable. Les instructions préenregistrées IS constituent des briques logicielles à partir desquelles il est possible de construire des jeux d'instructions plus complexes dont la structure et l'enchaînement est personnalisable.

Selon un exemple particulier, une instruction préenregistrée IS (se trouvant à l'état activé) peut également être désactivée si besoin en réponse à une commande de désactivation.

Dans l'exemple considéré ici, les instructions IS sont préenregistrées dans une première zone mémoire dédiée 30a et les instructions statiques 32 sont préenregistrées dans une deuxième zone mémoire dédiée 30b, indépendante de la première zone mémoire dédiée 30a. Cette configuration particulière permet d'éviter tout conflit entre les instructions statiques 32 et les instructions préenregistrées IS. Grâce à cette configuration particulière, il est possible de diminuer les risques qu'un tiers malveillant manipule des données associées à des instructions statiques de la carte à puce.

Le pré-enregistrement des instructions IS se fait par exemple lors de la fabrication de la carte à puce 20, au moment du chargement initial du système d'exploitation dans la puce de ladite carte 20.

Dans l'exemple considéré ici, on suppose que la carte à puce 20 comporte 20 instructions préenregistrées IS (ou blocs d'instructions) notés respectivement IS1 à IS20. Ces instructions sont codées dans un quelconque langage interprétable par le processeur 24 de la carte à puce 20. Comme décrit par la suite, l'un au moins parmi ces blocs d'instructions peut être activé au besoin afin de personnaliser le comportement de la carte à puce 20, et notamment la manière dont la carte à puce 20 traite une transaction.

Le processeur 6 piloté par le programme d'ordinateur PG1, met ici en oeuvre un certain nombre de modules représentés en **figure 3,** à savoir : un module de réception MD2, un module de formation MD4, un module d'enregistrement MD6 et un module d'exécution MD8.

Comme illustré en **figures 2** et **3,** le module de réception MD2 est configuré dans cet exemple pour recevoir une commande d'instructions CMD comprenant des identifiants ID correspondant à des instructions IS préenregistrées dans la mémoire 30 de la carte à puce 20. Comme expliqué par la suite, une telle commande CMD peut être une commande de script telle décrite par exemple ci-avant en référence aux étapes S18 et S22 de la **figure 1.** Selon un exemple particulier, la commande de script CMD reçue par le module de réception MD2 présente une structure BER-TLV (TLV pour « *Tag Length Value* » en anglais) conforme à la norme ISO 7816-4. Comme expliqué par la suite, la commande CMD est par exemple un objet dit « construit », comprenant une pluralité d'objets BER-TLV concaténés.

Le module de formation MD4 est configuré pour former, à partir des identifiants ID reçus par le module de réception MD2, un code RC (déjà mentionné ci-dessus) définissant un jeu d'instructions (noté par la suite 40), ce code étant interprétable par la carte à puce 20 et plus particulièrement par le processeur 22. Ce jeu d'instructions combine les instructions préenregistrées IS, correspondant aux identifiants ID reçus, pour l'exécution d'un premier contrôle sécuritaire, appelé aussi « contrôle sécuritaire étendu » (et noté CHK2 par la suite).

Le code RC peut se présenter sous toute forme approprié. Selon un exemple particulier, le code RC présente un format conforme à BER-TLV.

Le module d'enregistrement MD6 est configuré pour enregistrer, dans une mémoire de la carte à puce 20 (dans la mémoire 28 dans cet exemple), le code RC de sorte à configurer la carte à puce 20 pour exécuter le premier contrôle sécuritaire.

Le module d'exécution MD8 est configuré pour exécuter le jeu d'instruction défini par le code RC de sorte à réaliser le premier contrôle sécuritaire lors d'une transaction en cours de traitement par la carte à puce 20.

La configuration et le fonctionnement des modules MD2-MD8 de la carte à puce 20 apparaîtront plus précisément dans les exemples de réalisation décrits ci-après en référence aux **figures 4-6.** On comprendra toutefois que les modules MD2-MD8 tels que représentés en **figure 3** ne représente qu'un exemple de mise en oeuvre non limitatif de l'invention.

Les étapes réalisées par la carte à puce 20, illustrée en **figure 2** et **3,** lors d'un procédé de contrôle selon un mode de réalisation particulier, sont à présent décrites en référence aux **figure 4** et **5.** Pour ce faire, la carte à puce 20 exécute le programme d'ordinateur PG1.

On suppose dans cet exemple que la carte à puce 20 se trouve dans un état initial selon lequel aucune des instructions préenregistrées IS1-IS20 n'est activée. Ces instructions IS1-IS20 sont donc embarquées dans la mémoire 30 mais ne sont pas exécutées par la carte à puce 20. Comme indiqué précédemment, les instructions statiques 32 sont en revanche par nature toujours exécutées par la carte à puce 20.

Selon un mode de réalisation particulier, le procédé comprend une étape préliminaire (non représentée) d'enregistrement des instructions IS1-IS20 dans la mémoire 30. Comme déjà indiqué, dans l'exemple considéré ici, les instructions IS sont préenregistrées dans une première zone mémoire dédiée 30a et les instructions statiques 32 sont préenregistrées dans une deuxième zone mémoire dédiée 30b, indépendante de la première zone mémoire dédiée 30a, cette configuration permettant de sécuriser d'avantage les instructions préenregistrées (dynamiques) IS et également d'éviter tout conflit entre les instructions statiques 32 et les instructions préenregistrées IS.

Comme représenté en **figure 4,** on suppose à présent que le serveur SV1 de l'émetteur EM envoie (C2) une commande d'instructions CMD à destination de la carte à puce 20, ladite commande CMD comportant les identifiants ID1 à ID6 correspondant respectivement aux instructions IS1 à IS6 préenregistrées dans la mémoire 30. Cette commande CMD est par exemple envoyée (C2) lorsque l'émetteur EM détecte un nouveau schéma de fraude et souhaite adapter en conséquence le comportement sécuritaire de la carte à puce 20.

Le terminal T1 reçoit en B2 la commande CMD et transmet celle-ci à la carte 20 en B4. La carte à puce 20 reçoit la commande d'instruction CMD en A4.

Dans un exemple particulier, la commande CMD est un objet BER-TLV (dit « objet construit ») conforme à la norme ISO 7816-4, cette commande CMD comprenant la concaténation des identifiants ID1 à ID6.

La commande CMD est par exemple une commande de script transmise à la carte à puce 20 lors d'une transaction EMV, comme décrit par exemple ci-avant en référence aux étapes S18 et S22 représentées en **figure 1.** Dans le cas où la commande de script est reçue avant réception du GAC2 (cas de S18 en **figure 1**)**,** il est possible d'influencer le traitement sécuritaire de la transaction en cours et des transactions ultérieures. Dans le cas où la commande de script est reçue après réception du GAC2 (cas de S22 en **figure** 1), il est possible d'influencer le traitement sécuritaire des transactions ultérieures.

En réponse à la commande CMD, la carte à puce 20 génère ou forme (A6), à partir des identifiants ID1-DI6 reçus dans la commande CMD, un code (ou indicateur) RC définissant un jeu d'instruction noté 40 (**figures 4** et **5**)**.** Ce jeu d'instructions 40 combine les instructions préenregistrées IS1-IS6 (correspondant respectivement à ID1-ID6) pour l'exécution d'un premier contrôle sécuritaire, dit « contrôle sécuritaire étendu », noté CHK2.

Dans un exemple particulier, la commande CMD reçue en A4 comprend le code RC, ce dernier comportant les identifiants ID1 à ID6.

Le code RC peut se présenter sous toute forme et langage approprié, interprétable par le processeur 24. Dans un exemple particulier, la carte à puce 20 forme (A6) le code RC par concaténation des identifiants ID1 à ID6. Le code RC généré en A6 présente par exemple une structure BER-TLV. Un exemple plus précis de formation d'un tel code RC sera décrit ultérieurement.

Comme indiqué par la suite, la nature du jeu d'instruction 40 défini par le code RC peut varier selon le mode de réalisation considéré. En particulier, la manière dont la carte à puce 20 combine les instructions préenregistrées IS1-IS6 pour former le jeu d'instruction 40 peut être fonction de la commande CMD reçue.

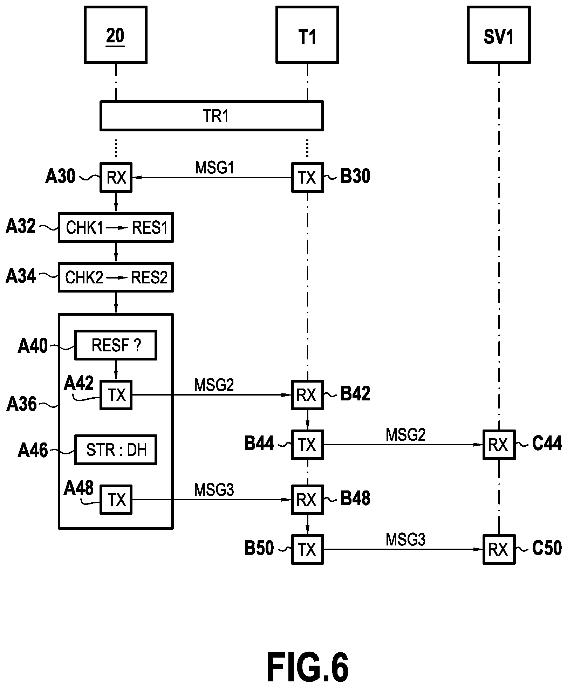

Au cours d'une étape d'enregistrement A8, la carte à puce 20 enregistre le code RC dans sa mémoire 28 (**figures 4** et **6**). L'enregistrement A8 configure la carte à puce 20 pour exécuter le premier contrôle sécuritaire CHK2 selon le jeu d'instruction 40. Autrement dit, l'enregistrement A8 entraîne l'activation du jeu d'instructions 40 généré à partir des instructions préenregistrées IS1-IS6. Une fois l'enregistrement A8 effectué, le jeu d'instructions 40 fait partie intégrante du programme exécutable par le processeur 24.

Le code RC est par exemple enregistré dans un fichier stocké dans la mémoire 28. L'enregistrement de ce fichier est de préférence sécurisé afin que celui-ci ne puisse pas être facilement altéré ou supprimé par un tiers malveillant. Ce code RC peut en outre être chiffré afin que la carte à puce 20 puisse par la suite l'authentifier, évitant ainsi que des codes RC falsifiés soient stockés dans la mémoire 28 de la carte à puce 20 par une tiers malveillant.

Selon un exemple de réalisation, la carte à puce 20 génère en A6 une pluralité de codes RC, chacun d'eux définissant un jeu d'instructions 40 correspondant.

Dans l'exemple considéré ici, on suppose à présent que le processeur 24 exécute (A10) le jeu d'instructions 40 généré en A6. Pour ce faire, le processeur 24 interprète le code RC stocké dans la mémoire 28 et en déduit la combinaison des instructions préenregistrées IS1-IS6 à exécuter (**figures 4** et **5**). L'exécution du jeu d'instructions 40 peut se faire lors d'une transaction EMV en cours de traitement par la carte à puce 20, par exemple en réponse à une commande de type GAC1 ou GAC2 comme décrit ci-avant en référence à la **figure 1.**

Selon un exemple particulier, la carte à puce 20 exécute le jeu d'instructions 40 lors d'une première étape de contrôle comme décrite ci-avant en référence à l'étape S9 (en réponse au message GAC1) représentée en **figure 1.**

Selon un exemple particulier, la carte à puce 20 exécute le jeu d'instructions 40 lors d'une première étape de contrôle comme décrite ci-avant en référence à l'étape S21 (en réponse au message GAC2) représentée en **figure 1.**

Dans l'exemple représenté ici en **figure 4,** au cours de l'exécution A10 du jeu d'instruction 40, le processeur 24 interprète le code RC et accède aux instructions préenregistrées IS1-IS6 dans la mémoire morte 30 pour réaliser (A12) le contrôle sécuritaire CHK2 (ou vérification de sécurité) d'une transaction EMV en cours. La nature et la structure du contrôle sécuritaire CHK2 peuvent varier selon le cas et notamment selon les besoins de l'émetteur EM de la carte à puce 20. Dans un exemple particulier, le contrôle sécuritaire CHK2 comprend la vérification du type du terminal avec lequel la carte à puce 20 coopère lors de la transaction en cours.

Dans cet exemple, la carte à puce 20 détermine en A14 un résultat RES2 délivré par le contrôle sécuritaire CHK2. Ce résultat RES2 est par exemple un booléen (VRAI ou FAUX). La carte à puce 20 réalise (A16) ensuite au moins une opération de sécurisation SEC définie dans le jeu d'instructions 40, l'opération de sécurisation SEC étant fonction du résultat RES2 du contrôle sécuritaire CHK2 réalisé en A12.

Divers opérations de sécurisation (ou réactions sécuritaires) SEC peuvent être réalisées en A16 par la carte à puce 20, comme décrit notamment ci-après en référence à la **figure 6.** Selon un exemple particulier, la carte à puce 20 peut réaliser en A16 au moins une opération de sécurisation SEC parmi les suivantes :

- traiter la transaction en cours selon une décision sécuritaire qui est générée par la carte à puce 20 en fonction du résultat RES2 obtenu en A14 ;

- envoyer une notification à un dispositif externe (le serveur SV1 par exemple), cette notification comprenant par exemple une donnée représentative du résultat RES2 du contrôle sécuritaire CHK2 réalisé en A12 ; et

- enregistrer, dans une mémoire de la carte à puce 20 (dans le fichier d'historisation LG par exemple), une donnée d'historisation représentative du contrôle sécuritaire CHK2 réalisé en A12.

L'invention permet avantageusement de personnaliser le comportement d'une carte à puce, de type EMV par exemple, à partir de blocs d'instructions préenregistrées dans une mémoire de ladite carte. Cette personnalisation peut être déclenchée à distance par l'émetteur de la carte à puce ou toute autre entité appropriée. On peut ainsi personnaliser la configuration d'une carte EMV à tout moment dans la vie de ladite carte, et ce sans risque de perdre le cas échéant la certification de la carte à puce dans la mesure où tous les blocs d'instructions préenregistrées peuvent être couverts par la certification.

Grâce à l'invention, il est possible de personnaliser le comportement sécuritaire d'une carte EMV. En particulier, il est possible d'adapter un contrôle sécuritaire exécuté par la carte, notamment lors d'une transaction EMV en cours.

L'invention permet d'adapter le comportement sécuritaire d'une carte EMV à de nouveaux schémas de fraude, y compris des schémas de fraude détectés alors que la carte à puce est déjà en cours d'utilisation.

L'invention permet non seulement de personnaliser la valeur de paramètres d'un contrôle sécuritaire exécuté par la carte EMV, mais plus généralement la structure même dudit contrôle sécuritaire. Il est ainsi possible d'adapter l'ordre ou le type d'opérations de contrôle sécuritaire exécutées par une carte EMV, notamment lors d'une transaction EMV. Il est possible de préenregistrer une pluralité d'instructions correspondant à diverses opérations de contrôle sécuritaire et d'activer une ou plusieurs instructions dans la carte EMV parmi les instructions préenregistrées disponibles afin de programmer dynamiquement les opérations de contrôle sécuritaire souhaitées.

L'invention permet par ailleurs de mettre à jour selon les besoins la configuration de la carte à puce en adaptant le jeu d'instructions 40 stocké dans sa mémoire. Pour ce faire, de nouvelles commandes CMD peuvent être envoyées ultérieurement à la carte à puce 20 afin d'adapter notamment les blocs d'instructions IS qui sont à l'état activé ou désactivé.

A noter que l'invention permet non seulement de sécuriser une carte à puce EMV mais également de mieux surveiller et étudier l'utilisation qui est en est faite, afin notamment de mieux connaître les habitudes de consommations d'un utilisateur ou encore afin de contrôler l'utilisation de la carte à puce 20 par le porteur légitime.

Selon un exemple particulier, une instruction préenregistrée IS définit une opération de contrôle, ou le cas échéant une pluralité d'opérations de contrôle.

Selon un exemple particulier, une pluralité d'instructions préenregistrées IS forment ensemble une opération de contrôle.

Afin de permettre la définition d'un jeu d'instructions 40 complexe comprenant une pluralité d'opérations de contrôle, certaines instructions préenregistrées IS (au moins une) peuvent correspondre à un opérateur de liaison définissant un lien de logique entre deux opérations de contrôle (ou plus). Parmi les opérateurs de liaison possible, on peut noter par exemple les opérateurs booléens suivants ;

- l'opérateur « ET » (« AND » en anglais) signifiant l'intersection des éléments visés ;
- l'opérateur « OU » (« OR » en anglais) signifiant la réunion des éléments visés ; et
- l'opérateur « SAUF » (« AND NOT » en anglais) signifiant l'exclusion du ou des éléments visés.

Les exemples d'opérateurs de liaison ci-dessus permettent ainsi de combiner de diverses façons des opérations de contrôle.

D'autres opérateurs de liaison sont possibles, parmi lesquels :

- un opérateur d'égalité (« = ») signifiant l'égalité entre les éléments visés ;
- un opérateur d'inégalité (« ≠ ») signifiant l'inégalité entre les éléments visés ; et
- un opérateur de comparaison (« > », « ≥ », « < », ou « ≤ ») définissant une comparaison entre les éléments visés.

Ces opérateurs de liaison forment la base d'une syntaxe pouvant être utilisée par l'émetteur EM de la carte à puce 20 pour définir le jeu d'instruction 40 à exécuter à partir d'instructions préenregistrées IS. La commande CMD peut ainsi comprendre au moins un identifiant ID correspondant à une instruction préenregistrée IS qui définit un tel opérateur de liaison. A partir de ces opérateurs de liaison, il est possible d'utiliser une syntaxe offrant une grande flexibilité dans la manière dont la configuration de la carte à puce 20 est personnalisée.

Selon un exemple particulier, les instructions préenregistrées IS formant le jeu d'instructions 40 (**figures 4** et **5**) comprennent :

- au moins deux premières instructions préenregistrées IS pour l'exécution d'opérations de contrôle sécuritaire (en tant que contrôle sécuritaire CHK2) ;
- au moins une deuxième instruction préenregistrée IS comprenant un opérateur de liaison définissant un lien de logique combinatoire entre lesdites opérations de contrôle sécuritaire, comme décrit ci-avant ; et
- au moins une troisième instruction préenregistrée pour exécuter une dite opération de sécurisation en fonction du résultat desdites opérations de contrôle sécuritaire conformément audit lien de logique combinatoire.

Selon un exemple particulier, on suppose par exemple que les instructions IS1 à IS6 activées par la commande CMD, comme décrit ci-avant en référence aux **figures 4** et **5,** sont définies comme suit :

- IS1 (correspondant à ID1) : définit une opération de contrôle comportant une comparaison entre les éléments visés ;
- IS2 (correspondant à ID2) : définit l'opérateur de liaison ≥ ;
- IS3 (correspondant à ID3): définit le paramètre ATC (pour « *Application Transaction Counter* ») conforme à EMV, ce paramètre ATC étant géré par la carte à puce 20 de sorte qu'il est incrémenté à chaque nouvelle transaction, de façon bien connue de l'homme du métier ;
- IS4 (correspondant à ID4) : définit une valeur seuil prédéfinie V1, exprimée par exemple en hexadécimal ;
- IS5 (correspondant à ID5) : indique qu'une réaction sécuritaire SEC de la carte à puce 20 est réalisée si le résultat RES2 de l'opération de comparaison défini par IS1-IS4 est positif ; et
- IS6 (correspondant à ID6): définit le type de la réaction sécuritaire (ou opération de sécurisation) SEC réalisée par la carte à puce 20.

Dans cet exemple particulier, le code RC formé en A6 (**figures 4** et **5**) par la carte à puce 20 se présente par exemple suivant la structure (ou le format) BER-TLV suivante :

$$RC = \{ID1\ L1\ ID2\ ID3\ ID4\ ID5\ L2\ ID6\}$$

où L1 définit la longueur en nombre de bits de la partie (ou valeur) "ID2 ID3 ID4", cette partie du code RC correspondant aux variables de l'opération de comparaison indiquée par ID2 ; et où L2 définit la longueur en nombre de bits de la partie (ou valeur) "ID6", cette partie du code RC correspondant à la variable de la réaction sécuritaire indiquée par ID6.

Dans un exemple particulier, le code RC présente un format BER-TLV comme suit :

$$RC = \{T\ L\ \{T1\ L1\ V1\} \ldots \{Tn\ Ln\ Vn\}\}$$

de sorte à coder l'instruction « ET » visant chaque sous-objet {T1 L1 V1} à {Tn Ln Vn} (n étant un entier supérieur ou égal à 2), chacun des sous objets comportant en tant que valeur respective V1 à Vn au moins un identifiant ID d'une instruction préenregistrée IS.

Dans l'exemple considéré ici, la carte à puce 20 est configurée en A10 (**figures 4** et **5**) pour interpréter le code RC et en déduire qu'elle doit réaliser une opération de contrôle consistant à vérifier si la valeur du paramètre ATC, maintenu à jour par la carte à puce 20, est supérieure ou égale à la valeur seuil prédéfinie V1 et, si c'est le cas, pour mettre en oeuvre la réaction sécuritaire (en A16) définie dans l'instruction préenregistrée IS6. Comme déjà expliqué (et illustré plus en détail par la suite), divers opérations de sécurisation SEC sont envisageables dans le cadre de l'invention. Dans le cas considéré ici, l'exécution de l'instruction préenregistrée IS6 cause par exemple la carte à puce 20 à forcer la poursuite de la transaction en cours en ligne.

On décrit à présent, en référence à la **figure 6,** les étapes réalisées par la carte à puce 20, illustrée en **figures 2** et **3,** lors d'un procédé de contrôle selon un mode de réalisation particulier. Pour ce faire, la carte à puce 20 exécute le programme d'ordinateur PG1.

On suppose dans cet exemple que la carte à puce 20 se trouve dans un état initial selon lequel les instructions préenregistrées IS1-IS6 ont été activées comme décrit ci-avant en référence aux **figures 4** et **5.**

Comme représenté en **figure 6,** on suppose à présent qu'une transaction EMV notée TR1 (une transaction de paiement par exemple) est en cours de traitement par la carte à puce 20 en coopération avec le terminal T1. Au cours d'une étape d'envoi B30, le terminal T1 envoie un message MSG1 à la carte à puce 20. En réponse à ce message MSG1, la carte à puce 20 réalise (A32) un contrôle sécuritaire préliminaire CHK1 (ou « *Card Risk Management* ») en exécutant les instructions statiques 32 qui sont, comme déjà indiqué, par nature toujours exécutées par la carte à puce 20. Le contrôle sécuritaire préliminaire CHK1 délivre (A32) un premier résultat RES1.

La carte à puce 20 réalise (A34) ensuite le contrôle sécuritaire CHK2, dit « contrôle sécuritaire étendu », de la même façon que décrit en référence à l'étape A12 représentée en **figure 4.** Comme déjà expliqué, la carte à puce 20 exécute le jeu d'instruction 40 défini par le code RC enregistré dans la mémoire 28. Le contrôle sécuritaire CHK2 délivre (A34) un deuxième résultat RES2.

Dans un exemple particulier, le message MSG1 est un message GAC1 tel que décrit précédemment en référence à l'étape S8 représentée en **figure 1.** Dans ce cas, les contrôles de sécurité CHK1 et CHK2 sont par exemple réalisés successivement lors de l'étape de contrôle S9 représentée en **figure 1.**

Selon une variante, le message MSG1 est un message GAC2 tel que décrit précédemment en référence à l'étape S20 représentée en **figure 1.** Dans ce cas, les contrôles de sécurité CHK1 et CHK2 sont par exemple réalisés successivement lors de l'étape de contrôle S21 représentée en **figure 1.**

Au cours d'une étape de sécurisation (ou de traitement) A36, la carte à puce 20 réalise, conformément au jeu d'instructions 40 défini par le code RC, au moins une opération de sécurisation comme déjà décrit en référence à l'étape A16 représentée en **figure 4.** Ce ou ces opérations de sécurisation sont ici fonction des résultats RES1 et RES2 des contrôles sécuritaires respectifs CHK1 et CHK2.

Plus spécifiquement, selon l'exemple particulier représenté en **figure 6,** la carte à puce 20 détermine (A40) un résultat final RESF à partir du résultat préliminaire RES1 issu du contrôle sécuritaire préliminaire CHK1 et du résultat RES2 issu du contrôle sécuritaire étendu CHK2. La carte à puce 20 traite ensuite la transaction TR1 en cours selon le résultat final RESF. Selon un exemple particulier, la carte à puce 20 envoie (A42) au terminal T1 un message MSG2 indiquant la décision sécuritaire prise par ladite carte 20 concernant la transaction TR1 en cours (acceptation, rejet, demande de poursuite de la transaction en ligne...). Le terminal T1 reçoit en B42 le message MSG2 et transmet (B44) celui-ci au serveur SV1, qui le reçoit en C44.

La réaction sécuritaire mise en oeuvre par la carte à puce 20 en A40 en fonction du résultat RESF peut varier selon le cas. Selon un exemple particulier, la carte à puce 20 met en oeuvre au moins l'une des réactions sécuritaires suivantes, listées selon un degré de sécurité croissant :

- forcer la transaction en cours à se poursuivre en ligne ;
- forcer le changement de l'interface de communication via laquelle la carte à puce 20 traite la transaction en cours (en forçant par exemple une transaction en cours de traitement en mode sans contact à se poursuivre en mode avec contact) ;
- forcer le refus de la transaction en cours ;
- bloquer l'interface de communication via laquelle la carte à puce 20 traite la transaction en cours (par exemple l'interface de communication sans contact de la carte) ;
- bloquer l'application utilisée par la carte à puce 20 pour traiter la transaction en cours ; et
- bloquer la carte à puce 20.

Selon un exemple particulier, le résultat préliminaire RES1 correspond à (ou est associé à) un premier degré de sécurité et le résultat final RESF correspond à (ou est associé à) un deuxième degré de sécurité, ledit deuxième degré de sécurité étant au moins aussi élevé que le premier degré de sécurité. Autrement dit, le contrôle sécuritaire étendu CHK2 est configuré par le jeu d'instructions 40 de sorte que la réaction sécuritaire globale de la carte à puce 20 soit au moins aussi forte que si le contrôle sécuritaire étendu CHK2 n'était pas réalisé. Dans ce mode particulier, la réalisation du contrôle sécuritaire étendu CHK2 permet de renforcer le comportement sécuritaire de la carte à puce 20. Cela permet avantageusement d'éviter une dégradation du niveau de sécurité de la carte à puce 20, dans le cas notamment où un contrôle sécuritaire étendu CHK2 serait activé de façon non autorisée dans la carte à puce 20.

Toujours au cours de l'étape de sécurisation A36 représentée en **figure 6,** la carte à puce 20 enregistre (A46) ici dans son fichier d'historisation LG une donnée d'historisation représentative du résultat RES2 du contrôle sécuritaire étendu CHK2 (ou éventuellement une donnée d'historisation représentative du résultat RESF obtenu en A40). Cette donnée d'historisation est stockée de sorte à pouvoir être consultée ultérieurement, par l'émetteur EM par exemple.

Toujours au cours de l'étape de sécurisation A36 représentée en **figure 6,** la carte à puce 20 envoie (A48) ici une notification MSG3 comprenant une donnée représentative du résultat RES2 du contrôle sécuritaire étendu CHK2 (ou éventuellement une donnée représentative du résultat RESF obtenu en A40). Le terminal T1 reçoit en B48 la notification MSG3 et transmet (B50) celui-ci au serveur SV1, qui le reçoit en C50.

A noter que la nature, le nombre et l'ordre (plus généralement, la structure) des opérations de sécurisation réalisées par la carte à puce 20 lors de l'étape de sécurisation A36 peuvent être adaptés selon le cas, en fonction par exemple des choix de l'émetteur EM. Selon un exemple particulier, la carte à puce 20 réalise l'une au moins parmi les étapes A40-A42, A44 et A48 en tant qu'opération de sécurisation lors de l'étape A36.

Selon un mode de réalisation particulier, si la carte à puce 20 réalise un contrôle sécuritaire étendu CHK2 comme décrit précédemment, elle le notifie au serveur SV1 de l'émetteur EM (**figures 4** et **6),** par exemple dans son message de transaction MSG2 envoyée en A42. La carte à puce 20 adapte par exemple l'état d'un bit dans le paramètre CVR (pour « *Card Vérification Results* ») envoyé au serveur SV1 conformément au protocole EMV, l'état de ce bit indiquant qu'un contrôle de sécurité étendu a été réalisé par la carte à puce 20. Dans un cas particulier, l'envoi d'une telle notification peut permettre à l'émetteur EM de détecter que des résultats du contrôle sécuritaire étendu sont disponibles, par exemple dans un paramètre IDD (pour « *Issuer Discretionary Data* ») envoyé par la carte à puce 20 selon le protocole EMV. Dans un exemple particulier, le message MSG2 envoyé en A42 comprend le paramètre CVR et un paramètre IDD.

Pour rappel, le champ IAD (pour « *Issuer Application Data* ») selon le protocole EMV est un champ obligatoire utilisé par une carte à puce EMV pour informer l'émetteur du déroulement d'une application, ce champ IAD comportant le paramètre normalisé CVR indiquant les résultats de vérifications de contrôle effectuées par la carte EMV. Comme déjà indiqué, la carte à puce 20 peut être configurée pour adapter la valeur du paramètre CVR afin de notifier l'émetteur EM qu'un contrôle sécuritaire étendu CHK2 a été réalisé.

Par ailleurs, tous les éléments dont la présence dans le champ IAD est configurable par l'émetteur sont appelés IDD. L'utilisation éventuelle d'un paramètre IDD dans le champ IAD pour transmettre les résultats RES2 du contrôle sécuritaire étendu de l'invention est avantageuse en ce qu'une quantité plus importante d'information peut être transmise que dans le paramètre CVR.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

## Revendications

**1.** Procédé de contrôle mis en oeuvre par un dispositif électronique fonctionnant selon le protocole EMV (20), ledit procédé comprenant les étapes suivantes :

- réception (A4) d'une commande d'instructions (CMD) comprenant des identifiants (ID) d'instructions (IS) préenregistrées dans une mémoire (30) du dispositif électronique ;
- formation (A6), à partir des identifiants, d'un code (RC) définissant un jeu d'instructions (40), ledit jeu d'instructions combinant les instructions (IS) préenregistrées pour l'exécution d'un premier contrôle sécuritaire ; et
- enregistrement (A8), dans une mémoire (28) du dispositif électronique, du code de sorte à configurer le dispositif électronique pour exécuter le premier contrôle sécuritaire.

**2.** Procédé selon la revendication 1, dans lequel le code est formé par concaténation des identifiants (ID1-ID6) reçus.

**3.** Procédé selon la revendication 1 ou 2, dans lequel la commande d'instructions (CMD) est une commande de script reçue lors d'une transaction EMV.

**4.** Procédé selon l'une quelconque des revendications 1 à 3, comprenant une étape d'exécution (A10 ; A36) du jeu d'instructions défini par le code (RC) de sorte à réaliser le premier contrôle sécuritaire lors d'une transaction en cours de traitement par le dispositif électronique.

**5.** Procédé selon la revendication 4, dans lequel l'étape d'exécution du jeu d'instructions est réalisée en réponse à une commande (MSG1) GENERATE AC préalablement reçue (A30) d'un terminal externe (T1) conformément au protocole EMV.

**6.** Procédé selon la revendication 4 ou 5, dans lequel l'étape d'exécution (A10 ; A36) du jeu d'instructions (40) comprenant :

- détermination (A14; A34) d'un premier résultat (RES2) délivré en réalisant le premier contrôle sécuritaire ; et

- réalisation (A16; A36) d'au moins une opération (A40-A48) de sécurisation définie dans ledit jeu d'instructions, l'opération de sécurisation étant fonction du premier résultat du premier contrôle sécuritaire.

7. Procédé selon la revendication 6, dans lequel ladite au moins une opération de sécurisation comprend au moins l'un parmi :

- envoi (A42) d'une notification (MSG2) comprenant une donnée représentative du premier résultat du premier contrôle sécuritaire ;
- enregistrement (A46), dans une mémoire (28) du dispositif électronique, d'une donnée d'historisation (DH) représentative du premier résultat du premier contrôle sécuritaire ;
- génération d'une décision sécuritaire selon laquelle la transaction en cours doit être traitée.

8. Procédé selon la revendication 6 ou 7, les instructions préenregistrées formant ledit jeu d'instructions comprenant :

- au moins deux premières instructions préenregistrées pour l'exécution d'une pluralité d'opérations de contrôle sécuritaire en tant que premier contrôle sécuritaire ;
- au moins une deuxième instruction préenregistrée comprenant un opérateur de liaison définissant un lien de logique combinatoire entre lesdites opérations de contrôle sécuritaire ; et
- au moins une troisième instruction préenregistrée pour exécuter une dite opération de sécurisation en fonction du résultat desdites opérations de contrôle sécuritaire conformément audit lien de logique combinatoire.

9. Procédé selon la revendication 8, dans lequel le premier résultat du premier contrôle sécuritaire est un booléen.

10. Procédé selon la revendication 8 ou 9, dans lequel l'opérateur de liaison comprend au moins l'un parmi :

- un opérateur « ET » ;
- un opérateur « OU » ;
- un opérateur d'égalité ou d'inégalité ; et
- un opérateur de comparaison.

11. Procédé selon l'une quelconque des revendications 6 à 10, comprenant les étapes suivantes :

- réalisation (A32) d'un contrôle sécuritaire préliminaire avant le premier contrôle sécuritaire (A34), le contrôle sécuritaire préliminaire délivrant un résultat préliminaire (RES1) ;
- détermination (A40) d'un résultat final (RESF) à partir du résultat préliminaire issu du contrôle sécuritaire préliminaire et du premier résultat issu du premier contrôle sécuritaire ; et
- traitement (A42) de la transaction en cours selon le résultat final.

12. Procédé selon la revendication 11, dans lequel le résultat préliminaire (RES1) correspond à un premier degré de sécurité et le résultat final (RESF) correspond à un deuxième degré de sécurité, ledit deuxième degré de sécurité étant au moins aussi élevé que le premier degré de sécurité.

13. Programme d'ordinateur (PG1) comportant des instructions pour l'exécution des étapes d'un procédé de contrôle selon l'une quelconque des revendications 1 à 12 lorsque ledit programme est exécuté par un ordinateur.

14. Support d'enregistrement (28) lisible par un ordinateur sur lequel est enregistré un programme d'ordinateur (PG1) comprenant des instructions pour l'exécution des étapes d'un procédé de configuration selon l'une quelconque des revendications 1 à 12.

15. Dispositif électronique fonctionnant selon le protocole EMV (20) comprenant :

- une mémoire (30) ;
- un module de réception (MD2) configuré pour recevoir une commande d'instructions comprenant des identifiants d'instructions (IS) préenregistrées dans ladite mémoire ;
- un module de formation (MD4) configuré pour former, à partir des identifiants, un code (RC) définissant un jeu d'instructions (40), ledit jeu d'instructions combinant les instructions préenregistrées pour l'exécution d'un premier contrôle sécuritaire ; et
- un module d'enregistrement (MD6) configuré pour enregistrer, dans une mémoire du dispositif électronique, le code de sorte à configurer le dispositif électronique pour exécuter le premier contrôle sécuritaire.

**Patentansprüche**

1. Steuerverfahren, das von einer elektronischen Vorrichtung umgesetzt wird, die gemäß dem EMV-Protokoll (20) funktioniert, wobei das Verfahren die folgenden Schritte umfasst:

- Empfangen (A4) eines Anweisungsbefehls (CMD), umfassend Kennungen (ID) von Anweisungen (IS), die in einem Speicher (30) der elektronischen Vorrichtung vorgespeichert sind,
- Bilden (A6) eines Codes (RC) aus den Kennungen, der einen Satz (40) von Anweisungen definiert, wobei der Satz von Anweisungen die vorgespeicherten Anweisungen (IS) für die Ausführung einer ersten Sicherheitskontrolle kombiniert, und
- Speichern (A8) eines Codes in einem Speicher (28) der elektronischen Vorrichtung, um die elektronische Vorrichtung zum Ausführen der ersten Sicherheitskontrolle auszugestalten.

2. Verfahren nach Anspruch 1, wobei der Code durch eine Verknüpfung der empfangenen Kennungen (ID1-ID6) gebildet wird.

3. Verfahren nach Anspruch 1 oder 2, wobei der Anweisungsbefehl (CMD) ein Skriptbefehl ist, der während einer EMV-Transaktion empfangen wird.

4. Verfahren nach einem der Ansprüche 1 bis 3, umfassend einen Ausführungsschritt (A10; A36) des Satzes von Anweisungen, der durch den Code (RC) definiert ist, um die erste Sicherheitskontrolle während einer Transaktion im Verlauf der Verarbeitung durch die elektronische Vorrichtung durchzuführen.

5. Verfahren nach Anspruch 4, wobei der Ausführungsschritt des Satzes von Anweisungen als Reaktion auf einen Befehl (MSG1) GENERATE AC durchgeführt wird, der zuvor von einem externen Endgerät (T1) gemäß dem EMV-Protokoll empfangen (A30) wurde.

6. Verfahren nach Anspruch 4 oder 5, wobei der Ausführungsschritt (A10; A36) des Satzes (40) von Anweisungen umfasst:

   - Bestimmen (A14; A34) eines ersten Ergebnisses (RES2), das durch die Durchführung der ersten Sicherheitskontrolle geliefert wird, und
   - Durchführen (A16; A36) von mindestens einer Sicherungsoperation (A40-A48), die in dem Satz von Anweisungen definiert ist, wobei die Sicherungsoperation von dem ersten Ergebnis der ersten Sicherheitskontrolle abhängt.

7. Verfahren nach Anspruch 6, wobei die mindestens eine Sicherungsoperation mindestens eines der Folgenden umfasst:

   - Senden (A42) einer Benachrichtigung (MSG2), umfassend eine Angabe, die für das erste Ergebnis der ersten Sicherheitskontrolle repräsentativ ist,
   - Speichern (A46) einer Ablageangabe (DH) in einem Speicher (28) der elektronischen Vorrichtung, die für das erste Ergebnis der ersten Sicherheitskontrolle repräsentativ ist,
   - Generieren einer Sicherheitsentscheidung gemäß der die laufende Transaktion verarbeitet werden soll.

8. Verfahren nach Anspruch 6 oder 7, wobei die vorgespeicherten Anweisungen den Satz von Anweisungen bilden, umfassend:

   - mindestens zwei erste vorgespeicherte Anweisungen für die Ausführung einer Vielzahl von Operationen zur Sicherheitskontrolle als erste Sicherheitskontrolle,
   - mindestens eine zweite vorgespeicherte Anweisung, umfassend einen Verbindungsoperator, der eine kombinatorische logische Verknüpfung zwischen den Operationen zur Sicherheitskontrolle definiert, und
   - mindestens eine dritte vorgespeicherte Anweisung zum Ausführen einer Sicherungsoperation in Abhängigkeit von dem Ergebnis der Operationen zur Sicherheitskontrolle gemäß der kombinatorischen logischen Verknüpfung.

9. Verfahren nach Anspruch 8, wobei das erste Ergebnis der ersten Sicherheitskontrolle ein boolescher Wert ist.

10. Verfahren nach Anspruch 8 oder 9, wobei der Verbindungsoperator mindestens einen der Folgenden umfasst:

   - einen Operator "UND",
   - einen Operator "ODER",
   - einen Operator gleich oder ungleich, und
   - einen Vergleichsoperator.

11. Verfahren nach einem der Ansprüche 6 bis 10, umfassend die folgenden Schritte:

   - Durchführen (A32) einer vorläufigen Sicherheitskontrolle vor der ersten Sicherheitskontrolle (A34), wobei die vorläufige Sicherheitskontrolle ein vorläufiges Ergebnis (RES1) liefert,
   - Bestimmen (A40) eines Endergebnisses (RESF) aus dem vorläufigen Ergebnis, das aus der vorläufigen Sicherheitskontrolle hervorgeht, und dem ersten Ergebnis, das aus der ersten Sicherheitskontrolle hervorgeht, und
   - Verarbeiten (A42) der laufenden Transaktion gemäß dem Endergebnis.

12. Verfahren nach Anspruch 11, wobei das vorläufige Ergebnis (RES1) einem ersten Sicherheitsgrad entspricht und das Endergebnis (RESF) einem zweiten Sicherheitsgrad entspricht, wobei der zweite Sicherheitsgrad zumindest genauso hoch ist wie der erste Sicherheitsgrad.

13. Computerprogramm (PG1), das Anweisungen für die Ausführung der Schritte eines Steuerverfahrens nach einem der Ansprüche 1 bis 12 umfasst, wenn das Programm von einem Computer ausgeführt wird.

14. Speichermedium (28), das für einen Computer lesbar ist, auf dem ein Computerprogramm (PG1), umfassend Anweisungen für die Ausführung der Schritte eines Ausgestaltungsverfahrens nach einem der Ansprüche 1 bis 12, gespeichert ist.

15. Elektronische Vorrichtung, die gemäß dem EMV-Protokoll (20) funktioniert, umfassend:

- einen Speicher (30),
- ein Empfangsmodul (MD2), das ausgestaltet ist, um einen Anweisungsbefehl, umfassend Kennungen von Anweisungen (IS), die in dem Speicher vorgespeichert sind, zu empfangen,
- ein Bildungsmodul (MD4), das ausgestaltet ist, um aus den Kennungen einen Code (RC) zu bilden, der einen Satz (40) von Anweisungen definiert, wobei der Satz von Anweisungen die vorgespeicherten Anweisungen für die Ausführung einer ersten Sicherheitskontrolle kombiniert, und
- ein Speichermodul (MD6), das ausgestaltet ist, um den Code in einem Speicher der elektronischen Vorrichtung zu speichern, um die elektronische Vorrichtung zum Ausführen der ersten Sicherheitskontrolle auszugestalten.

**Claims**

1. A control method implemented by an electronic device operating according to the EMV protocol (20), said method comprising the following steps:

- receiving (A4) an instruction command (CMD) comprising identifiers (ID) for instructions (IS) pre-recorded in a memory (30) of the electronic device;
- forming (A6), from identifiers, a code (RC) defining a set of instructions (40), said set of instructions combining the prerecorded instructions (IS) for the execution of a first security check; and
- recording (A8), in a memory (28) of the electronic device, the code so as to configure the electronic device to execute the first security check.

2. The method according to claim 1, wherein the code is formed by concatenation of the received identifiers (ID1-ID6).

3. The method according to claim 1 or 2, wherein the instruction command (CMD) is a script command received during an EMV transaction.

4. The method according to any one of claims 1 to 3, comprising a step (A10; A36) for executing the set of instructions defined by the code (RC) so as to perform the first security check during a transaction being processed by the electronic device.

5. The method according to claim 4, wherein the step for executing the set of instructions is carried out in response to a command (MSG1) GENERATE AC previously received (A30) from an external terminal (T1) according to the EMV protocol.

6. The method according to claim 4 or 5, wherein the step (A10; A36) for executing the set of instructions (40) comprises:

- determining (A14; A34) a delivered first result (RES2) by performing the first security check; and
- performing (A16; A36) at least one securing operation (A40-A48) defined in said set of instructions, the securing operation depending on the first result of the first security check.

7. The method according to claim 6, wherein said at least one securing operation comprises at least one from among:

- sending (A42) a notification (MSG2) comprising a datum representative of the first result of the first security check;
- recording (A46), in a memory (28) of the electronic device, a historization datum (DH) representative of a first result of the first security check;
- generating a security decision according to which the transaction in progress must be processed.

8. The method according to claim 6 or 7, the prerecorded instructions forming said set of instructions comprising:

- at least two first prerecorded instructions for executing a plurality of security check operations as first security check;
- at least one second prerecorded instruction comprising a linking operator defining a combining logic link between said security check operations; and
- at least one third prerecorded instruction for executing one said securing operation as a function of the result of said security check operations according to said combining logic link.

9. The method according to claim 8, wherein the first result of the first security check is a Boolean.

10. The method according to claim 8 or 9, wherein the linking operator comprises at least one from among:

- an "AND" operator;
- an "OR" operator;
- an equality or inequality operator; and
- a comparison operator.

11. The method according to any one of claims 6 to 10, comprising the following steps:

- performing (A32) a preliminary security check before the first security check (A34), the preliminary security check delivering a preliminary result (RES1);
- determining (A40) a final result (RESF) from the preliminary result derived from the preliminary security check and the first result derived from the first security check; and
- processing (A42) the transaction in progress according to the final result.

12. The method according to claim 11, wherein the preliminary result (RES1) corresponds to a first degree of security and the final result (RESF) corresponds to a second degree of security, the second degree of security being at least as high as the first degree of security.

13. A computer program (PG1) including instructions for executing steps of a control method according to any one of claims 1 to 12 when said program is executed by a computer.

14. A recording medium (28) readable by a computer on which a computer program (PG1) is recorded comprising instructions for executing steps of a configuration method according to any one of claims 1 to 12.

15. An electronic device operating according to the EMV protocol (20) comprising:

- a memory (30);
- a receiving module (MD2) configured to receive an instruction command comprising instruction identifiers (IS) prerecorded in said memory;
- a forming module (MD4) configured to form, from the identifiers, a code (RC) defining a set of instructions (40), said set of instructions combining the prerecorded instructions for the execution of a first security check; and
- a recording module (MD6) configured to record, in a memory of the electronic device, the code so as to configure the electronic device to execute the first security code.

**FIG.1**

EMETTEUR EM

CMD(ID)

T1

CMD(ID)

26

24

PG1  RC  LG

22

30

IS : IS1-IS20

32  30b  30a

28

SV1

20

# FIG.2

MODULE DE RECEPTION — MD2

MODULE DE FORMATION — MD4

MODULE D'ENREGISTREMENT — MD6

MODULE D'EXECUTION — MD8

# FIG.3

20

**FIG.4**

**FIG.5**

FIG.6

**EP 3 291 188 B1**

## RÉFÉRENCES CITÉES DANS LA DESCRIPTION

**Documents brevets cités dans la description**

- WO 2012037971 A1
- WO 2012162351 A1